# EUROPÄISCHE PATENTSCHRIFT

(11) **EP 3 020 524 B1**
(45) Veröffentlichungstag und Bekanntmachung des Hinweises auf die Patenterteilung: **31.10.2018**
(21) Anmeldenummer: 14193012.3
(22) Anmeldetag: 13.11.2014
(51) Int. Cl.: C09J 11/04, C08G 77/14, B27N 3/00, B29D 7/01, C08G 18/00, C09J 5/06, C09J 11/06, C09J 11/08, C09J 161/28, C09J 175/04, C08L 97/00, C08G 77/26, C09J 183/10, B27N 3/04, B29C 43/00, B29C 43/22, C08K 3/36, C09J 5/00, C08K 5/544, C08K 9/06

(54) **Verfahren zum Herstellen von Holzwerkstoffplatten, insbesondere OSB-Holzwerkstoffplatten, und Holzwerkstoffplatte herstellbar nach diesem Verfahren**
Method for producing wood composite panels, in particular OSB wood composite panels, and wooden panel which can be produced with this method
Procédé de fabrication de panneaux en bois, notamment de panneaux en bois OSB, et panneaux en bois pouvant être fabriqués selon ce procédé

(43) Veröffentlichungstag der Anmeldung: 18.05.2016
(73) Patentinhaber: SWISS KRONO Tec AG, 6004 Luzern (CH)
(72) Erfinder: Gier, Andreas, 66399 Mandelbachtal (DE); Kalwa, Norbert, 32805 Horn-Bad Meinberg (DE); Müller, Dirk, 16816 Neuruppin (DE)
(74) Vertreter: Maikowski & Ninnemann Patentanwälte Partnerschaft mbB

(56) Entgegenhaltungen:
- EP-A1- 2 615 126
- EP-A2- 0 842 967
- EP-B1- 2 447 332
- DE-A1-102010 034 997

## Beschreibung

Die vorliegende Erfindung betrifft ein Verfahren zum Herstellen von Holzwerkstoffplatten, insbesondere OSB-Holzwerkstoffplatten nach Anspruch 1 und eine Holzwerkstoffplatte herstellbar nach diesem Verfahren nach Anspruch 12.

### Beschreibung

Grobspanplatten, auch OSB-Platten (oriented strand board) genannt, sind Holzwerkstoffplatten, die aus langen Spänen (strands) hergestellt werden. Die ursprünglich als Abfallprodukte der Furnier- und Sperrholzindustrie anfallenden OSB-Platten werden jedoch zunehmend im Holz- und Fertighausbaus eingesetzt, da OSB-Platten leicht sind und trotzdem die an Bauplatten gesetzten statischen Anforderungen erfüllen. So werden OSB-Platten als Bauplatten und als Wand- oder Dachbeplankung oder auch im Fußbodenbereich eingesetzt.

Die Herstellung der OSB-Platten erfolgt in einem mehrstufigen Prozess, wobei zunächst die Späne oder Strands aus entrindetem Rundholz, bevorzugt Nadelhölzer, in Längsrichtung durch rotierende Messer herausgeschnitten werden. Im sich anschließenden Trocknungsvorgang wird die natürliche Feuchtigkeit der Strands bei hohen Temperaturen reduziert. Der Feuchtigkeitsgrad der Strands kann je nach verwendeten Klebstoff variieren. So kann in Abhängigkeit vom Klebstoff eine Benetzung auf eher feuchten Strands oder auf trockenen Strands günstiger sein. Außerdem sollte während des Pressvorganges möglichst wenig Feuchtigkeit in den Strands vorhanden sein, um den während des Pressvorganges entstehenden Dampfdruck weitestgehend zu reduzieren, da dieser die Rohplatte ansonsten zum Platzen bringen könnte.

Im Anschluss an die Trocknung der Strands werden diese in eine Beleimvorrichtung eingeführt, in welcher der Leim bzw. Klebstoff fein verteilt auf die Späne aufgebracht wird. Zur Verleimung werden überwiegend PMDI- (polymeres Diphenylmethandiisocyanat) oder MUPF-Leime (Melamin-Harnstoff-Phenol-Formaldehyd) eingesetzt. Die Leime können in den OSB-Platten auch gemischt eingesetzt werden. Diese Leime werden verwendet, da die OSB-Platten wie oben erwähnt häufig für konstruktive Anwendungen genutzt werden. Dort müssen feucht- bzw. nässebeständige Leime verwendet werden.

Nach der Beleimung werden die beleimten Strands in Streuapparaturen alternierend längs und quer zur Produktionsrichtung gestreut, so dass die Strands kreuzweise in mindestens drei Schichten angeordnet sind (Unterschicht - Mittelschicht - Oberschicht, wobei die Streurichtung von Unter- und Oberschicht gleich sind, jedoch von der Streurichtung der Mittelschicht abweichen).

Im Anschluss an die Streuung der Strands erfolgt ein kontinuierliches Verpressen der selbigen unter hohem Druck und hoher Temperatur von z.B. 200 bis 250°C.

Es hat sich allerdings bei der Prüfung der OSB-Platten hinsichtlich ihrer technologischen Werte gezeigt, dass Festigkeitswerte und Bruchbilder bei zerstörenden Prüfungen auf Benetzungsprobleme des Leims auf den Strands schließen lassen. Es ist beispielsweise bekannt, dass Nadelhölzer je nach Jahreszeit unterschiedliche Mengen an Fettsäuren in ihren Zelloberflächen besitzen. Diese erhöhten Mengen an Fettsäuren verschlechtern die Benetzung der Holzoberfläche mit Leimen, woraus verminderte Festigkeitswerte bei der Bestimmung der Querzugfestigkeit ergeben. Da jedoch im konstruktiven Bereich bestimmte Mindestfestigkeiten garantiert werden müssen bzw. externe Prüfungen dokumentiert werden müssen, muss die Leimmenge bei diesen Produkten angehoben werden. Dies führt zu Mehrkosten und einem höheren Prüfaufwand. Auch nimmt dadurch die Menge an minderwertigen Qualitäten, die der geforderten Spezifikation nicht entsprechen, nimmt.

Entsprechend ergeben sich bei der Herstellung von OSB-Platten, die den Anforderungen an die Mindestfestigkeit entsprechen müssen, Nachteile, wie Mehrkosten aufgrund der Verwendung von größeren Leim- bzw. Klebstoffmengen, ein erhöhter Prüfaufwand und eine größere Menge an Platten mit Minderqualität (höherer B-Wareanteil).

Der vorliegenden Erfindung liegt somit die Aufgabe zugrunde, die angeführten Nachteile bei der Herstellung von OSB-Platten zu überwinden und ein Verfahren bereitzustellen, welches die Reduzierung verwendeten Leim- bzw. Klebstoffmengen ermöglicht.

Diese Aufgabe wird erfindungsgemäß durch ein Verfahren mit den Merkmalen des Anspruchs 1 und eine Holzwerkstoffplatte mit den Merkmalen des Anspruchs 12 gelöst.

Entsprechend wird ein Verfahren zum Herstellen von OSB-Holzwerkstoffplatten bereitgestellt, welches die folgenden Schritte umfasst:
a) Bereitstellen von Holzstrands mit einer Länge zwischen 50 bis 200 mm, einer Breite zwischen 5 bis 50 mm, und einer Dicke zwischen 0,1 und 2 mm;
b) Auftragen von mindestens einem Klebstoffsystem auf die Holzstrands, wobei das Klebstoffsystem umfasst:
   - mindestens einen Polydiphenlymethandiisocyanat (PMDI)-Klebstoff, und
   - mindestens einen Nanopartikel kleiner 500 nm, wobei der mindestens eine Partikel mit mindestens einer Verbindung der allgemeinen Formel (I)

      **RₐSiX₍₄₋ₐ₎** **(I),**

      oder der allgemeinen Formel (II)

      **O_{b}X_{c}(OH)_{d}RₑSiO(4-b-c-d-e)/2** **(II)**

      modifiziert ist, wobei
      - X H, OH oder ein hydrolysierbarer Rest ist ausgewählt aus der Gruppe umfassend Halogen, Alkoxy, Carboxy, Amino, Monoalkylamino oder Dialkylamino, Aryloxy, Acyloxy, Alkylcarbonyl,
      - R ein nicht-hydrolysierbarer organischer Rest R ist ausgewählt aus der Gruppe umfassend substituiertes und nicht-substituiertes Alkyl, substituiertes und nicht-substituiertes Aryl, substituiertes und nicht-substituiertes Alkenyl, substituiertes und nicht-substituiertes Alkinyl, substituiertes und nicht-substituiertes Cycloalkyl, die durch -O- oder-NH- unterbrochen sein können, und
      - wobei R mindestens eine funktionelle Gruppe Q aufweist, die ausgewählt ist aus einer Gruppe enthaltend eine Epoxid-, Hydroxy-, Ether-, Amino-, Monoalkylamino, Dialkylamino-, substituierte und nicht-substituierte Anilino-, Amid-, Carboxy-, Acryl-, Acryloxy-, Methacryl-, Methacryloxy-, Mercapto,- Cyano-, Alkoxy,-Isocyano-, Aldehyd-, Alkylcarbonyl-, Säureanhydrid- und/oder Phosphorsäuregruppe,
      - a = 1, 2, 3, insbesondere 1 ist,
      - b, c, d = 0 oder 1 sind, und
      - e = 1, 2, 3 ist;
   wobei das Klebstoffsystem in einer Menge zwischen 2,2 und 2,5 Gew%, bevorzugt zwischen 2,2 und 2,4 Gew% bezogen auf die Holzstrands (Holz atro) zu den Holzstrands zugegeben wird, und
c) Verpressen der mit dem Klebstoffsystem versetzten Holzstrands zu OSB-Holzwerkstoffplatten.

Das vorliegende Verfahren ermöglicht durch die Verwendung des Klebstoffsystems aus Polymerklebstoff und mit Silanverbindungen modifizierten Nanopartikeln die Reduzierung der bei der Herstellung von Holzwerkstoffplatten, wie OSB-Platten typischerweise verwendeten Menge an wasserbeständigen Leim bzw. Klebstoff um mindestens 20 bis 30% gegenüber herkömmlichen wasserbeständigen Klebstoffen. Die durch das vorliegend zum Einsatz kommende Klebstoffsystem bedingte Reduzierung an verwendeter Menge an wasserbeständigen teuren Klebstoffen für Platten für konstruktive Anwendungen ist erheblich und ermöglicht eine deutlich günstigere Herstellung der Platten bei gleichbleibenden Eigenschaften, wie insbesondere der Querzugfestigkeit.

Es wird angenommen, dass die Verwendung des Klebstoffsystems aus Polymerklebstoff und mit Silanverbindungen modifizierten Nanopartikeln eine Verbesserung der Benetzung der Strandoberfläche mit dem Leim sowie eine verbesserte Haftung des Leims auf der Strandoberfläche bewirken. Durch die verbesserte Haftung des Leims auf der Strandoberfläche wird wiederum sichergestellt, dass im Hinblick auf das Festigkeitsniveau der OSB-Platten Schwankungen reduziert werden und zusätzlich permanente Anpassungen an jahreszeitliche Schwankungen im optimalen Fall völlig unter bleiben können.

Die Silanverbindungen verbessern durch ihre Reaktionsfähigkeit mit der Holzoberfläche die Haftung des PMDI-Leims bzw. PMDI-Polymerklebstoffs auf der Holzoberfläche. So verfügen die Silanverbindungen, die chemisch an die Nanopartikel gebunden sind, sowohl über reaktive bzw. funktionelle Gruppen, wie z.B. OH-Gruppen, zur chemischen Anbindung an den verwendeten PMDI-Klebstoff, als auch über mindestens eine funktionelle Gruppe, wie z.B. Isocyanat- oder Glycidylgruppen, zur chemischen Anbindung an freie OH-Gruppen der Cellulose auf der Strandoberfläche. Die mit den Silanverbindungen modifizierten Nanopartikel stellen somit eine Mittlersubstanz zwischen der Matrix des Polymerklebstoffs und der Holzoberfläche der Strands dar.

Die vorliegend verwendeten Holzstrands haben eine Länge zwischen 50 bis 200 mm, bevorzugt 70 bis 180 mm, insbesondere bevorzugt 90 bis 150 mm; eine Breite zwischen 5 bis 50 mm, bevorzugt 10 bis 30 mm, insbesondere bevorzugt 15 bis 20 mm; und eine Dicke zwischen 0,1 und 2 mm, bevorzugt zwischen 0, 3 und 1,5 mm, insbesondere bevorzugt zwischen 0, 4 und 1 mm.

Vorliegend wird ein Polyurethan-Klebstoffes verwendet, wobei der Polyurethan-Klebstoff auf der Basis von Polydiphenylmethandiisocyanat (PMDI) vorliegt.

In einer weiteren Ausführungsform des vorliegenden Verfahrens ist es ebenfalls möglich mehr als einen Polymerklebstoff zu verwenden. So können als erster Polymerklebstoff mindestens ein Polykondensationsklebstoff wie ein Polyamid-, ein Polyester-, ein Silikon- und/oder ein Formaldehydkondensat-Klebstoff, insbesondere ein Phenol-Formaldehydharz-Klebstoff (PF), ein Kresol-/ Resorcin-Formaldehydharz-Klebstoff, Harnstoff-Formaldehyd Harz-Klebstoff (UF) und/oder Melamin-Formaldehyd-Harz-Klebstoff (MF) verwendet werden, und als zweiter Polymerklebstoff mindestens ein Polyadditionsklebstoff wie ein Epoxidharz-, Polycyanurat- und/oder ein Polyurethan-Klebstoff, insbesondere ein Polyurethan-Klebstoff auf der Basis von Polydiphenylmethandiisocyanat (PMDI), verwendet werden. Derartige Hybridklebstoffsysteme sind aus der EP 2 447 332 B1 bekannt.

In einer bevorzugten Ausführungsform werden die Partikel mit mindestens zwei unterschiedlichen Verbindungen der allgemeinen Formel (I) und/oder (II) modifiziert bzw. gemischt.

Der Rest X ist vorteilhafterweise ausgewählt aus einer Gruppe enthaltend Fluor, Chlor, Brom, lod, C₁₋₆-Alkoxy, insbesondere Methoxy, Ethoxy, n-Propoxy und Butoxy, C₆₋₁₀-Aryloxy, insbesondere Phenoxy, C₂₋₇-Acyloxy, insbesondere Acetoxy oder Propionoxy, C₂₋₇-Alkylcarbonyl, insbesondere Acetyl, Monoalkylamino oder Dialkylamino mit C₁ bis C₁₂, insbesondere C₁ bis C₆. Besonders bevorzugte hydrolysierbare Gruppen sind C₁₋₄ Alkoxygruppen, insbesondere Methoxy und Ethoxy.

Der nicht- hydrolysierbare R ist bevorzugt ausgewählt aus einer Gruppe umfassend substituiertes und nicht-substituiertes C₁-C₃₀-Alkyl, insbesondere C₅-C₂₅-Alkyl, substituiertes und nicht-substituiertes C₂-C₆-Alkenyl, substituiertes und nicht-substituiertes C₂-C₆-Alkinyl und substituiertes und nicht-substituiertes C₆-C₁₀-Aryl.

In einer Ausführungsform ist der nicht-hydrolysierbare Rest R ausgewählt aus der Gruppe enthaltend Methyl, Ethyl, n-Propyl, Isopropyl, n-Butyl, s-Butyl, t-Butyl, Pentyl, Hexyl, Cyclohexyl, Vinyl, 1-Propenyl, 2-Propenyl, Butenyl, Acetylenyl, Propargyl, Phenyl und Naphthyl.

Unter dem Begriff "nicht-hydrolysierbarer organischer Rest" ist im Rahmen der vorliegenden Erfindung ein organischer Rest zu verstehen, der in Gegenwart von Wasser nicht zur Bildung einer mit dem Si-Atom verknüpften OH-Gruppe oder NH₂-Gruppe führt.

In einer Variante ist die mindestens eine funktionelle Gruppe Q ausgewählt aus einer Gruppe enthaltend Epoxid-, Hydroxy-, Ether-, Acryl-, Acryloxy-, Methacryl-, Methacryloxy-, Alkoxy-, Cyano- und/oder Isocyano-Gruppe. Die mindestens eine funktionelle Gruppe Q, die im organischen nicht-hydrolysierbaren Rest R enthalten ist, umfasst in einer weiteren Variante vorteilhafterweise ein Epoxid-, insbesondere ein Glycidyl- oder Glycidyloxy-Gruppe, ein Amin- oder eine Isocyano-Gruppe.

Die funktionellen Gruppen, über die eine Vernetzung möglich ist, umfassen insbesondere polymerisierbare und/oder polykondensierbare Gruppen, wobei unter der Polymerisationsreaktion auch Polyadditionsreaktionen zu verstehen sind. Die funktionellen Gruppen werden bevorzugt so ausgewählt, dass über gegebenenfalls katalysierte Polymerisations- und/oder Kondensationsreaktionen eine organische Vernetzung zwischen dem Polymerklebstoff und der Holzoberfläche und auch ggf. zwischen verschiedenen Klebstoffsystemen ausgeführt werden kann.

In einer besonders bevorzugten Ausführungsform werden als Silane Gamma-Isocyanatopropyltriethoxysilan oder ein Gycidyloxypropyltriethoxysilan verwendet.

Wie beschrieben, verfügt der nicht-hydrolisierbare Rest R zwingend über mindestens eine funktionelle Gruppe Q. Darüber hinaus kann der Rest R auch mit weiteren Resten substituiert vorliegen.

Der Begriff "substituiert", in Verwendung mit "Alkyl", "Alkenyl", "Aryl", etc., bezeichnet die Substitution eines oder mehrerer Atome, in der Regel H-Atome, durch einen oder mehrere der folgenden Substituenten, bevorzugt durch einen oder zwei der folgenden Substituenten: Halogen, Hydroxy, geschütztes Hydroxy, Oxo, geschütztes Oxo, C₃-C₇-Cycloalkyl, bicyclisches Alkyl, Phenyl, Naphthyl, Amino, geschütztes Amino, monosubstituiertes Amino, geschütztes monosubstituiertes Amino, disubstituiertes Amino, Guanidino, geschütztes Guanidino, ein heterozyklischer Ring, ein substituierter heterozyklischer Ring, Imidazolyl, Indolyl, Pyrrolidinyl, C₁-C₁₂-Alkoxy, C₁-C₁₂-Acyl, C₁-C₁₂-Acyloxy, Acryloyloxy, Nitro, Carboxy, geschütztes Carboxy, Carbamoyl, Cyano, Methylsulfonylamino, Thiol, C₁-C₁₀-Alkylthio und C₁-C₁₀-Alkylsulfonyl. Die substituierten Alkygruppen, Arylgruppen, Alkenylgruppen, können einmal oder mehrfach substituiert sein und bevorzugt 1- oder 2-mal, mit denselben oder unterschiedlichen Substituenten.

Der Begriff "Alkinyl", wie hier verwendet, bezeichnet einen Rest der Formel R-C=C-, insbesondere ein "C₂-C₆-Alkinyl". Beispiele für C₂-C₆-Alkinyle schließen ein: Ethinyl, Propinyl, 2-Butinyl, 2-Pentinyl, 3-Pentinyl, 2-Hexinyl, 3-Hexinyl, 4-Hexinyl, Vinyl sowie Di- und Tri-ine von geraden und verzweigten Alkylketten.

Der Begriff "Aryl", wie hierin verwendet, bezeichnet aromatische Kohlenwasserstoffe, beispielsweise Phenyl, Benzyl, Naphthyl, oder Anthryl. Substituierte Arylgruppen sind Arylgruppen, die, wie oben definiert, mit einem oder mehreren Substituenten, wie oben definiert, substituiert sind.

Der Begriff "Cycloalkyl" umfasst die Gruppen Cyclopropyl, Cyclobutyl, Cyclopentyl, Cyclohexyl und Cycloheptyl.

Die bevorzugt verwendeten Partikel weisen eine Größe zwischen 2 und 400 nm, bevorzugt zwischen 2 bis 100 nm aufweist, insbesondere bevorzugt zwischen 2 bis 50 nm auf. Die Partikel können insbesondere von oxidischer, hydroxidischer oder oxihydroxidischer Natur sein, die über unterschiedliche Verfahren wie zum Beispiel lonenaustauschprozess, Plasma-Prozess, Sol-Gel Verfahren, Vermahlung oder auch Flammabscheidung, hergestellt werden können. In einer bevorzugten Ausführungsform werden Partikel auf Basis von SiO₂, Al₂O₃, ZrO₂, TiO₂, SnO verwendet.

In einer weiteren Ausführungsform beträgt der Gehalt an Polymerklebstoff im vorliegend verwendeten Klebstoffsystem mindestens 90 Gew%, bevorzugt mindestens 80 Gew%, insbesondere bevorzugt mindestens 70 Gew%. Die Silanverbindungen und Partikel werden jeweils in einer Menge zwischen 1 bis 15 Gew%, bevorzugt 3 bis 13 Gew%, insbesondere bevorzugt zwischen 5 bis 10 Gew% bezogen auf die Gesamtmenge an Polymerklebstoff verwendet. Der Lösemittelgehalt, der im Wesentlichen durch die Verwendung der Silane bedingt ist, liegt ebenfalls zwischen 1 bis 15 Gew%, bevorzugt 3 bis 13 Gew%, insbesondere bevorzugt zwischen 5 bis 10 Gew%. Bei diesen Angaben ist der Lösemittelgehalt aus dem eingesetzten Polymerklebstoff jedoch zunächst nicht berücksichtigt.

In einer bevorzugten Ausführungsform wird das Klebstoffsystem auf die Holzstrands aufgesprüht. Dabei können die modifizierten Nanopartikel mit dem Polymerklebstoff vor dem Versprühen vermischt werden oder es ist auch denkbar, die modifizierten Nanopartikel vor dem Aufsprühen des Polymerklebstoffs separat auf die Holzstrands aufzubringen.

Das Verpressen der mit dem vorliegenden Klebstoffsystem besprühten Holzstrands erfolgt bevorzugt bei Temperaturen zwischen 150 und 250°C, insbesondere bevorzugt bei Temperaturen zwischen 200 und 220°C.

Das vorliegend verwendete Klebstoffsystem kann in einem Verfahren umfassend die folgenden Schritte hergestellt werden:
a) Einbringen von mindestens einem Partikel in eine Dispersion oder Suspension eines (ersten) Polymerklebstoffes;
b) Zugabe von mindestens einer ersten Verbindung der allgemeinen Formel (I) und/oder (II) und ggf. eines Polymerisationsstarters,
c) optional Zugabe von mindestens einer zweiten, von der ersten verschiedenen Verbindung der allgemeinen Formel (I) und/oder (II),
d) Zugabe von mindestens einem Katalysator, insbesondere einer Säure.

In einem weiteren Schritt ist es ebenfalls möglich, einen weiteren zweiten Polymerklebstoff dem Klebstoffsystem zuzugeben. Der zweite Polymerklebstoff unterscheidet sich bevorzugt von dem ersten Polymerklebstoff. Es ist zum Beispiel denkbar, als ersten Polymerklebstoff einen Polyurethan-Klebstoff wie z.B. PMDI zu verwenden und als einen zweiten Polymerklebstoff einen Formaldehydklebstoff wie ein Melamin-Formaldehydklebstoff einzusetzen.

Das vorliegend verwendete Klebstoffsystem kann ebenfalls in einem Verfahren mit den folgenden Schritten hergestellt werden:
a) Mischen von mindestens zwei verschiedenen Verbindungen der allgemeinen Formeln (I) und (II),
b) Zugabe von mindestens einem Partikel zu der in Schritt a) hergestellten Mischung und ggf. Zugabe von mindestens einem Katalysator, insbesondere einer Säure,
c) Zugabe von mindestens einem (ersten) Polymerklebstoff.

Auch in diesem Fall kann in einem weiteren Schritt ein weiterer zweiter Polymerklebstoff zugegeben werden.

Als geeignete Polymerisationsstarter können z.B. Dibutylisozinndilaurat, Oxazolidin, Bisoxazolidin, Zinkchlorid sowie Stoffklassen der Ketimine oder Aldimine verwendet werden.

Als Katalysator geeignete anorganische und/oder organische Säuren sind ausgewählt aus einer Gruppe enthaltend Phosphorsäure, Essigsäure, *p*-Toluolsulfonsäure, Salzsäure, Ameisensäure oder Schwefelsäure. Ebenfalls geeignet sind Ammoniumsalze wie Ammoniumsulfat, die als schwache Säuren reagieren.

Die Partikel werden bevorzugt in einer Menge zwischen 1 bis 15 Gew%, bevorzugt 3 bis 13 Gew%, insbesondere bevorzugt zwischen 5 bis 10 Gew% verwendet.

Die Temperaturen während des gesamten Herstellungsprozesses des Klebstoffsystems liegen üblicherweise in Bereichen zwischen 20 bis 80°C, bevorzugt zwischen 30 bis 60°C.

Es ist ebenfalls möglich, das vorliegende Klebstoffsystem in einem Verfahren herzustellen, bei welchem zunächst nur mit Vorstufen aus den oben genannten Substanzen gearbeitet wird und die nanoskaligen Partikel in Lösung wachsen gelassen werden. Hierzu wird eine alkoholische Lösung, z.B. *iso*-Propanol vorgelegt. Anschließend werden *p*-Toluolsulfonsäure und ein Partikelmaterial wie z.B. Zr-n-propoxid zugegeben, wobei nanoskalige Partikel in Lösung entstehen, die anschließend weiter modifiziert werden können.

Die mit dem vorliegenden Verfahren hergestellte OSB-Holzwerkstoffplatte weisen einen Polymerklebstoffgehalt bzw. Gehalt an Klebstoffsystem von 2,2 und 2,5 Gew%, bevorzugt 2,2 und 2,4 Gew%, bezogen auf die Gesamtmenge der Holzstrands (Holz atro) auf. Die OSB-Holzwerkstoffplatte enthält einen Polyurethan-Klebstoff als Polymerklebstoff.

Anzumerken ist, dass die Verwendung des vorliegenden Klebstoffsystems in den OSB-Holzwerkstoffplatten die technologischen Werte der Platten wie Querzug- und Biegefestigkeit im Vergleich zu herkömmlichen Klebstoffen ohne die modifizierten Nanopartikel nicht verändern.

Entsprechend wird vorliegend eine OSB-Holzwerkstoffplatte bereitgestellt, die einen reduzierten Klebstoffanteil aufweist, ohne dass die technologischen Werte verändert werden. Durch die Verwendung des vorliegenden Klebstoffsystems aus Polymerklebstoff und Silanmodifizierten Nanopartikeln kann zu mindestens teilweise ein Wegschlagen des Polymerklebstoffes wie PMDI-Leim in die Holzmatrix verhindert werden.

Die Erfindung wird nachfolgend unter Bezugnahme auf mehrere Ausführungsbeispiele näher erläutert.

### Ausführunasbeispiel 1: Herstellung eines ersten Klebstoffsvstems

Es wird eine Urethanmatrix (PMDI) vorgelegt, in welcher noch OH- Gruppen bzw. nichtgebundene Cyanato-Gruppen vorliegen. SiO₂-Partikel werden in die Urethanmatrix, mit einer Konzentration von 0,1- 10 Gew. % vorzugsweise 0,5 - 5 Gew. % vorzugsweise 1 - 2 Gew. % eingerührt. Anschließend erfolgt die Zugabe eines Isocyanatopropyltriethoxysilans und eventuell eines Starters Dibutylisozinndilaurat für den Fall, dass nicht bereist ein Starter im Polyurethan enthalten ist. Diese Mischung wird auf 50 °C erwärmt und für ca. 30 Minuten bei dieser Temperatur gehalten. Nach Abkühlen auf Raumtemperatur wird ein Glycidyloxypropyltrieethoxysilan und eine Säure als Katalysator, z.B. Phosphorsäure zugegeben und für weitere 60 Minuten gerührt. Das so hergestellte Polyurethan-Silan-SiO₂-Gemisch kann ggf. anschließend mit einer Melaminharzmatrix vermischt werden.

### Ausführunasbeispiel 2: Herstellung eines zweiten Klebstoffsvstems

Es wird ein Ethanol/Wassergemisch vorgelegt, zu welchem ein Gemisch aus Glycidyloxypropyltrieethoxysilanes und Tetraethoxysilan zugegeben wird. Anschließend erfolgt die Zugabe einer wässrigen Kieselsol Lösung, d.h. nanoskalige SiO₂ Partikel in Wasser, sowie Zugabe einer Säure, z.B. Essigsäure oder para-Toluolsulfonsäure als Katalysator und weitere 5 Minuten gerührt. Nach 5 Minuten Rührzeit wird der PMDI-Klebstoff zugegeben. Danach ist das Klebstoffsystem einsatzbereit.

### Ausführungsbeispiel 3: Herstellung einer OSB-Platte

In einer OSB-Linie wurden OSB-Platten (18 mm) unter Standardbedingungen produziert.

Dabei wurde in der Deck- und der Mittelschicht mit PMDI als Leim gearbeitet, wobei der Leimanteil bei 2,9 Gew% bezogen auf Strands (Holz atro) lag (Vergleichsplatte).

In einem Versuch wurde dann dem PMDI-Leim das oben unter Ausführungsbeispiel 2 beschriebene Silan in einer Menge von 5 Gew% zugegeben. Mit dem modifizierten PMDI-Leim wurden OSB-Platten produziert, wobei mit einem Leimanteil bezogen auf die Strands von 2,4 Gew% gearbeitet wurde. Von den Platten wurde anschließend die Querzugfestigkeit bestimmt. Bei der Versuchsplatte wurde ein Wert von 0,43 N/mm² gefunden. Bei der Vergleichsplatte wurde ein Wert von 0,44 N/mm² ermittelt.

Damit zeigt sich, dass eine signifikante Leimreduzierung nahezu gleiche technologische Werte liefert. Mit Hilfe der an nanoskalige Partikel gekoppelte Silane läßt sich anscheinend zu mindestens teilweise das Wegschlagen des PMDI-Leimes in die Holzmatrix verhindern.

## Patentansprüche

1. Verfahren zum Herstellen von OSB-Holzwerkstoffplatten umfassend die folgenden Schritte:
a) Bereitstellen von Holzstrands mit einer Länge zwischen 50 bis 200 mm, einer Breite zwischen 5 bis 50 mm, und einer Dicke zwischen 0,1 und 2 mm;
b) Auftragen von mindestens einem Klebstoffsystem auf die Holzstrands, wobei das Klebstoffsystem
- einen Polydiphenlymethandiisocyanat (PMDI)-Klebstoff, und
- Nanopartikel kleiner 500 nm enthält, wobei die Nanopartikel mit mindestens einer Verbindung der allgemeinen Formel (I)
**RₐSiX₍₄₋ₐ₎** **(I),**
oder der allgemeinen Formel (II)
**O_{b}X_{c}(OH)_{d}RₑSiO(4-b-c-d-e)/2** **(II)**
modifiziert sind, wobei
- X H, OH oder ein hydrolysierbarer Rest ist ausgewählt aus der Gruppe umfassend Halogen, Alkoxy, Carboxy, Amino, Monoalkylamino oder Dialkylamino, Aryloxy, Acyloxy, Alkylcarbonyl,
- R ein nicht-hydrolisierbarer organischer Rest R ist ausgewählt aus der Gruppe umfassend substituiertes und nicht-substituiertes Alkyl, substituiertes und nicht-substituiertes Aryl, substituiertes und nicht-substituiertes Alkenyl, substituiertes und nicht-substituiertes Alkinyl, substituiertes und nicht-substituiertes Cycloalkyl, die durch -O- oder-NH- unterbrochen sein können, und
- wobei R mindestens eine funktionelle Gruppe Q aufweist, die ausgewählt ist aus einer Gruppe enthaltend eine Epoxid-, Hydroxy-, Ether-, Amino-, Monoalkylamino, Dialkylamino-, substituierte und nicht-substituierte Anilino-, Amid-, Carboxy-, Acryl-, Acryloxy-, Methacryl-, Methacryloxy-, Mercapto,- Cyano-, Alkoxy,-Isocyano-, Aldehyd-, Alkylcarbonyl-, Säureanhydrid- und/oder Phosphorsäuregruppe,
- a = 1, 2, 3, insbesondere 1 ist,
- b, c, d = 0 oder 1 sind, und
- e = 1, 2, 3 ist;
wobei das Klebstoffsystem in einer Menge zwischen 2,2 und 2,5 Gew%, bevorzugt zwischen 2,2 und 2,4 Gew% bezogen auf die Holzstrands (Holz atro) zu den Holzstrands zugegeben wird, und
c) Verpressen der mit dem Klebstoffsystem versetzten Holzstrands zu OSB_Holzwerkstoffplatten.

2. Verfahren nach Anspruch 1, **dadurch gekennzeichnet, dass** die Holzstrands eine Länge zwischen 70 bis 180 mm, insbesondere bevorzugt 90 bis 150 mm; eine Breite zwischen 10 bis 30 mm, insbesondere bevorzugt 15 bis 20 mm; und eine Dicke zwischen 0, 3 und 1,5 mm, insbesondere bevorzugt zwischen 0, 4 und 1 mm aufweisen.

3. Verfahren nach einem der vorhergehenden Ansprüche, **dadurch gekennzeichnet, dass** X ausgewählt ist aus einer Gruppe enthaltend Fluor, Chlor, Brom, lod, C₁₋₆-Alkoxy, insbesondere Methoxy, Ethoxy, n-Propoxy und Butoxy, C₆₋₁₀-Aryloxy, insbesondere Phenoxy, C₂₋₇-Acyloxy, insbesondere Acetoxy oder Propionoxy, C₂₋₇-Alkylcarbonyl, insbesondere Acetyl, Monoalkylamino oder Dialkylamino mit C₁ bis C₁₂, insbesondere C₁ bis C₆.

4. Verfahren nach einem der vorhergehenden Ansprüche, **dadurch gekennzeichnet, dass** R ausgewählt ist aus einer Gruppe umfassend substituiertes und nicht-substituiertes C₁-C₃₀-Alkyl, insbesondere C₅-C₂₅-Alkyl, substituiertes und nicht-substituiertes C₂-C₆-Alkenyl, substituiertes und nicht-substituiertes C₂-C₆-Alkinyl und substituiertes und nicht-substituiertes C₆-C₁₀-Aryl.

5. Verfahren nach einem der vorhergehenden Ansprüche **dadurch gekennzeichnet, dass** R ausgewählt ist aus der Gruppe enthaltend Methyl, Ethyl, n-Propyl, Isopropyl, n-Butyl, s-Butyl, t-Butyl, Pentyl, Hexyl, Cyclohexyl, Vinyl, 1-Propenyl, 2-Propenyl, Butenyl, Acetylenyl, Propargyl, Phenyl und Naphthyl.

6. Verfahren nach einem der vorhergehenden Ansprüche, **dadurch gekennzeichnet, dass** die mindestens eine funktionelle Gruppe Q ausgewählt ist aus einer Gruppe enthaltend Epoxid-, Hydroxy-, Ether-, Acryl-, Acryloxy-, Methacryl-, Methacryloxy-, Alkoxy-, Cyano- und/oder Isocyano-Gruppe.

7. Verfahren nach einem der vorhergehenden Ansprüche, **dadurch gekennzeichnet, dass** die mindestens eine funktionelle Gruppe Q ein Epoxid-, insbesondere eine Glycidyl- oder Glycidyloxy-Gruppe, eine Amin- oder eine Isocyano-Gruppe ist.

8. Verfahren nach einem der vorhergehenden Ansprüche, **dadurch gekennzeichnet, dass** der mindestens eine Partikel eine Größe zwischen 2 und 400 nm, bevorzugt zwischen 2 bis 100 nm, insbesondere bevorzugt zwischen 2 bis 50 nm aufweist.

9. Verfahren nach einem der vorhergehenden Ansprüche, **dadurch gekennzeichnet, dass** der mindestens eine Partikel ein oxidischer, hydroxidischer oder oxihydroxidischer Partikel, insbesondere auf der Basis von SiO₂, Al₂O₃, ZrO₂, TiO₂, SnO.

10. Verfahren nach einem der vorhergehenden Ansprüche, **dadurch gekennzeichnet, dass** die modifizierten Partikel in einer Menge zwischen 1 bis 15 Gew%, bevorzugt 3 bis 13 Gew%, insbesondere bevorzugt 5 bis 10 Gew% bezogen auf die Gesamtmenge an Polymerklebstoff verwendet werden.

11. Verfahren nach einem der vorhergehenden Ansprüche, **dadurch gekennzeichnet, dass** die modifizierten Partikel dem Polymerklebstoff zugemischt werden oder auf die Holzstrands vor deren Beleimung aufgebracht werden.

12. OSB-Holzwerkstoffplatte aus Holzstrands mit einer Länge zwischen 50 bis 200 mm, einer Breite zwischen 5 bis 50 mm, und einer Dicke zwischen 0,1 und 2 mm herstellbar nach einem Verfahren gemäß einem der vorhergehenden Ansprüche **gekennzeichnet durch** einen Polydiphenlymethandiisocyanat (PMDI)--Klebstoffgehalt von 2,2 und 2,5 Gew%, bevorzugt 2,2 und 2,4 Gew% bezogen auf die Gesamtmenge der Holzstrands (Holz atro).

## Claims

1. Method of producing OSB wood-base panels, comprising the steps of:
a) providing wood strands having a length between 50 and 200 mm, a width between 5 to 50 mm, and a thickness between 0.1 and 2 mm;
b) applying at least one adhesive system to the wood strands, wherein the adhesive system comprises
- a polydiphenylmethane diisocyanate (PMDI) adhesive, and
- nanoparticles below 500 nm, wherein the nanoparticles are modified with at least one compound of general formula (I)
**RₐSiX₍₄₋ₐ₎** **(I)**,
or of general formula (II)
**O_{b}X_{c}(OH)_{d}RₑSiO(4-b-c-d-e)/2** **(II)**,
where
- X is H, OH or a hydrolyzable moiety selected from the group comprising halogen, alkoxy, carboxyl, amino, monoalkylamino or dialkylamino, aryloxy, acyloxy, alkylcarbonyl,
- R is a nonhydrolyzable organic moiety R selected from the group comprising substituted and unsubstituted alkyl, substituted and unsubstituted aryl, substituted and unsubstituted alkenyl, substituted and unsubstituted alkynyl, substituted and unsubstituted cycloalkyl, which may each be interrupted by -O- or -NH-, and
- wherein R includes at least one functional group Q selected from a group containing an epoxy, hydroxyl, ether, amino, monoalkylamino, dialkylamino, substituted and unsubstituted anilino, amide, carboxyl, acryloyl, acryloyloxy, methacryloyl, methacryloyloxy, mercapto, cyano, alkoxy, isocyano, aldehyde, alkylcarbonyl, acid anhydride and/or phosphoric acid group,
- a is = 1, 2, 3, especially 1,
- b, c, d are = 0 or 1, and
- e is = 1, 2, 3;
wherein the adhesive system is admixed to the wood strands in an amount between 2.2 and 2.5 wt%, preferably between 2.2 and 2.4 wt% based on the wood strands (absolutely dry wood), and
c) pressing the wood strands admixed with the adhesive system to form OSB wood-base panels.

2. Method according to Claim 1, **characterized in that** the wood strands have a length between 70 to 180 mm and more preferably 90 to 150 mm, a width between 10 to 30 mm and more preferably 15 to 20 mm, and a thickness between 0.3 and 1.5 mm, more preferably between 0.4 and 1 mm.

3. Method according to any preceding claim, **characterized in that** X is selected from a group containing fluorine, chlorine, bromine, iodine, C₁₋₆alkoxy, especially methoxy, ethoxy, n-propoxy and butoxy, C₆₋₁₀aryloxy, especially phenoxy, C₂₋₇acyloxy, especially acetoxy or propionoxy, C₂₋₇alkylcarbonyl, especially acetyl, monoalkylamino or dialkylamino of C₁ to C₁₂, especially C₁ to C₆.

4. Method according to any preceding claim, **characterized in that** R is selected from a group comprising substituted and unsubstituted C₁₋₃₀alkyl, especially C₅₋₂₅alkyl, substituted and unsubstituted C₂₋₆alkenyl, substituted and unsubstituted C₂₋₆alkynyl and substituted and unsubstituted C₆₋₁₀aryl.

5. Method according to any preceding claim, **characterized in that** R is selected from the group containing methyl, ethyl, n-propyl, isopropyl, n-butyl, s-butyl, t-butyl, pentyl, hexyl, cyclohexyl, vinyl, 1-propenyl, 2-propenyl, butenyl, acetylenyl, propargyl, phenyl and naphthyl.

6. Method according to any preceding claim, **characterized in that** the at least one functional group Q is selected from a group containing epoxy, hydroxyl, ether, acryloyl, acryloyloxy, methacryloyl, methacryloyloxy, alkoxy, cyano and/or isocyano groups.

7. Method according to any preceding claim, **characterized in that** the at least one functional group Q is an epoxy group, especially a glycidyl or glycidyloxy group, an amine group or an isocyano group.

8. Method according to any preceding claim, **characterized in that** the at least one particle has a size between 2 and 400 nm, preferably between 2 to 100 nm and more preferably between 2 to 50 nm.

9. Method according to any preceding claim, **characterized in that** the at least one particle an oxidic, hydroxidic or oxyhydroxidic particle, especially based on SiO₂, Al₂O₃, ZrO₂, TiO₂, SnO.

10. Method according to any preceding claim, **characterized in that** the modified particles are used in an amount between 1 to 15 wt%, preferably 3 to 13 wt% and more preferably 5 to 10 wt% based on the total amount of polymer adhesive.

11. Method according to any preceding claim, **characterized in that** the modified particles are admixed to the polymer adhesive or are applied to the wood strands before resination thereof.

12. OSB wood-base panel composed of wood strands having a length between 50 to 200 mm, a width between 5 to 50 mm, and a thickness between 0.1 and 2 mm, obtainable by a method according to any preceding claim, **characterized by** a polydiphenylmethane diisocyanate (PMDI) adhesive content of 2.2 and 2.5 wt%, preferably 2.2 and 2.4 wt% based on the total amount of the wood strands (absolutely dry wood).

## Revendications

1. Procédé servant à fabriquer des panneaux en matériau dérivé du bois OSB (à grandes particules orientées), comprenant les étapes suivantes :
a) la fourniture de lamelles de bois avec une longueur comprise entre 50 et 200 mm, une largeur comprise entre 5 et 50 mm et une épaisseur comprise entre 0,1 et 2 mm ;
b) l'application d'au moins un système de colle sur les lamelles de bois, dans lequel le système de colle contient
- une colle à base de diisocyanate de diphénylméthane polymérisé (PMDI), et
- des nanoparticules inférieures à 500 nm, dans lequel les nanoparticules sont modifiées avec au moins un composé de la formule générale (I)
RaSiX(4-a) (I)
ou de la formule générale (II)
ObXc(OH)dReSiO(4-b-c-d-e)/2 (II)
dans lequel
- X est H, OH ou un radical hydrolysable choisi parmi le groupe comprenant l'halogène, l'alcoxy, le carboxy, l'amino, le monoalkylamino ou le dialkylamino, l'aryloxy, l'acyloxy, l'alkylcarbonyle,
- R est un radical R organique non hydrolysable choisi parmi le groupe comprenant un alkyle substitué ou non substitué, un aryle substitué et non substitué, un alcényle substitué et non substitué, un alcynyle substitué et non substitué, un cycloalkyle substitué et non substitué, qui peuvent être interrompus par -O- ou -NH-, et
- dans lequel R présente au moins un groupe fonctionnel Q, qui est choisi parmi un groupe contenant un groupe époxy, un groupe hydroxy, un groupe éther, un groupe amino, un groupe monoalylamino, un groupe dialkylamino, un groupe anilino substitué et non substitué, un groupe amide, un groupe carboxy, un groupe acryle, un groupe acryloxy, un groupe méthacryle, un groupe méthacryloxy, un groupe mercapto, un groupe cyano, un groupe alkoxy, un groupe isocyano, un groupe aldéhyde, un groupe alkylcarbonyle, un groupe anhydride d'acide et/ou un groupe d'acide phosphorique,
- a = 1, 2, 3, en particulier est 1,
- b, c, d = 0 ou sont 1, et
- e = 1, 2, 3 ;
dans lequel le système de colle est ajouté aux lamelles de bois en une quantité comprise entre 2,2 et 2,5 % en poids, de manière préférée entre 2,2 et 2,4 % en poids par rapport aux lamelles de bois (bois abs. sec), et
c) la compression des lamelles de bois mélangées au système de colle pour donner des panneaux en matériau dérivé du bois OSB.

2. Procédé selon la revendication 1, **caractérisé en ce que** les lamelles de bois présentent une longueur comprise entre 70 et 180 mm, en particulier de manière préférée entre 90 et 150 mm ; une largeur comprise entre 10 et 30 mm, en particulier de manière préférée entre 15 et 20 mm; et une épaisseur comprise entre 0,3 et 1,5 mm, en particulier de manière préférée entre 0,4 et 1 mm.

3. Procédé selon l'une quelconque des revendications précédentes, **caractérisé en ce que** X est choisi parmi un groupe contenant du fluor, du chlore, du brome, de l'iode, de l'alkoxy en C₁₋₆, en particulier du méthoxy, de l'éthoxy, du n-propoxy et du butoxy, de l'aryloxy en C₆₋₁₀, en particulier du phénoxy, de l'acyloxy en C₂₋₇, en particulier de l'acétoxy ou du propionoxy, de l'alkylcarbonyle en C₂₋₇, en particulier de l'acétyle, du monoalkylamino ou du dialkylamino avec C₁ à C₁₂, en particulier C₁ à C₆.

4. Procédé selon l'une quelconque des revendications précédentes, **caractérisé en ce que** R est choisi parmi un groupe comprenant un alkyle en C₁-C₃₀ substitué et non substitué, en particulier de l'alkyle en C₅-C₂₅, un alcényle en C₂-C₆ substitué et non substitué, un alcynyle en C₂-C₆ substitué et non substitué, et un aryle en C₆-C₁₀ substitué et non substitué.

5. Procédé selon l'une quelconque des revendications précédentes, **caractérisé en ce que** R est choisi parmi le groupe contenant du méthyle, de l'éthyle, du n-propyle, de l'isopropyle, du n-butyle, du s-butyle, du t-butyle, du pentyle, de l'hexyle, du cyclohexyle, du vinyle, du 1-propényle, du 2-propényle, du butényle, de l'acétylényle, du propargyle, du phényle et du naphtyle.

6. Procédé selon l'une quelconque des revendications précédentes, **caractérisé en ce que** l'au moins un groupe fonctionnel Q est choisi parmi un groupe contenant un groupe époxy, un groupe hydroxy, un groupe éther, un groupe acryle, un groupe acryloxy, un groupe méthacryle, un groupe méthacryloxy, un groupe alkoxy, un groupe cyano et/ou un groupe isocyano.

7. Procédé selon l'une quelconque des revendications précédentes, **caractérisé en ce que** l'au moins un groupe fonctionnel Q est un groupe époxy, en particulier un groupe glycidyle ou glycidyloxy, un groupe amine ou un groupe isocyano.

8. Procédé selon l'une quelconque des revendications précédentes, **caractérisé en ce que** l'au moins une particule présente une taille comprise entre 2 et 400 nm, de manière préférée entre 2 et 100 nm, en particulier de manière préférée entre 2 et 50 nm.

9. Procédé selon l'une quelconque des revendications précédentes, **caractérisé en ce que** l'au moins une particule est une particule oxydique, hydroxydique ou oxyhydroxydique, en particulier à base de SiO₂, Al₂O₃, ZrO₂, de TiO₂, SnO.

10. Procédé selon l'une quelconque des revendications précédentes, **caractérisé en ce que** les particules modifiées sont utilisées en une quantité comprise entre 1 et 15 % en poids, de manière préférée entre 3 et 13 % en poids, en particulier de manière préférée entre 5 et 10 % en poids, par rapport à la quantité totale en colle polymérique.

11. Procédé selon l'une quelconque des revendications précédentes, **caractérisé en ce que** les particules modifiées sont ajoutées à la colle polymérique ou sont appliquées sur les lamelles de bois avant leur encollage.

12. Panneau OSB en matériau dérivé du bois composé de lamelles de bois, avec une longueur comprise entre 50 et 200 mm, une largeur comprise entre 5 et 50 mm, et une épaisseur comprise entre 0,1 et 2 mm, pouvant être fabriqué selon un procédé selon l'une quelconque des revendications précédentes, **caractérisé par** une teneur en colle à base de diisocyanate de diphénylméthane polymérisé (PMDI) de 2,2 et de 2,5 % en poids, de manière préférée de 2,2 et 2,4 % en poids par rapport à la quantité totale des lamelles de bois (bois abs. sec).
